# EUROPÄISCHE PATENTSCHRIFT

(11) **EP 4 199 794 B1**
(45) Veröffentlichungstag und Bekanntmachung des Hinweises auf die Patenterteilung: **29.01.2025**
(21) Anmeldenummer: 22769081.5
(22) Anmeldetag: 17.08.2022
(51) Int. Cl.: A47J 37/07

(54) **GRILL ODER KOCHER**
BARBECUE OR COOKER
BARBECUE OU APPAREIL DE CUISSON

(30) Priorität: 09.11.2021 DE 102021212606
(43) Veröffentlichungstag der Anmeldung: 28.06.2023
(73) Patentinhaber: LotusGrill GmbH, 67117 Limburgerhof (DE)
(72) Erfinder: OHLER, Mischa, 67166 Otterstadt (DE); PAAKKANEN, Harri, 69126 Heidelberg (DE)
(74) Vertreter: Ullrich & Naumann PartG mbB
(86) Internationale Anmeldenummer: PCT/DE2022/200187
(87) Internationale Veröffentlichungsnummer: WO 2023/083421

(56) Entgegenhaltungen:
- DE-A1- 102015 221 099
- KR-A- 20150 000 117
- US-A1- 2016 183 722
- US-A1- 2018 325 314

## Beschreibung

Die Erfindung betrifft einen Grill oder Kocher. Der Einfachheit halber ist nachfolgend meist von einem Grill die Rede, wobei es sich dabei um einen Tischgrill zur Positionierung auf einem Tisch oder um einen Standgrill zur Positionierung auf einem Boden oder dergleichen handeln kann.

Der Grill umfasst eine als Gehäuse dienende Außenschale, eine innerhalb der Außenschale allseitig mit Abstand zu der Außenschale angeordnete Trägerschale, eine innerhalb der Trägerschale stehende Brenneinheit, einen oberhalb der Brenneinheit angeordneten Grillrost und/oder ein Behältnis zum Kochen und Braten sowie eine Gasversorgungseinrichtung, die von unterhalb der Trägerschale einen Fluidstrom zur oder in die Brenneinheit erzeugt.

Zum Stand der Technik sei lediglich beispielhaft auf die EP 1 838 187 B1 und EP 2 785 227 B1 verwiesen. Aus dieser Druckschrift ist ein Holzkohlegrill bekannt, wonach die Brenneinheit als Holzkohle-Brennkammer ausgeführt ist.

Für den bekannten Holzkohlegrill ist wesentlich, dass er innerhalb eines Gehäuses eine Holzkohle-Brennkammer aufweist, wobei die Holzkohle-Brennkammer, im Betrieb, durch einen Deckel geschlossen ist. Der Deckel kann in sich geschlossen oder gelocht sein. Auch eine gestufte gelochte Ausführung des Deckels ist bekannt. Die Holzkohle-Brennkammer steht auf einer Anzündschale und lässt sich von unterhalb der Anzündschale mit Außenluft versorgen, wodurch der Anzündvorgang unter Nutzung einer Anzündpaste und auch der Abbrand der Holzkohle begünstigt wird.

Aus der Praxis sind unterschiedlichste Ausgestaltungen der Holzkohle-Brennkammer bekannt, insbesondere mit unterschiedlich gestalteten Wandungen. Eine Lochung oder Schlitzung der Wandung soll die Wärmestrahlung zur Seite hin und schließlich auch zum Grillrost hin begünstigen.

In der Praxis hat sich der bekannte Holzkohlegrill bewährt. Sofern dort die Holzkohle-Brennkammer sicher, d.h. unverkippbar im Gehäuse positioniert ist, bietet der Grill ein erhebliches Maß an Sicherheit. Auch hat sich gezeigt, dass unter Verwendung einer geeigneten Holzkohle, beispielsweise von der Firma LotusGrill GmbH, ein raucharmer Betrieb des Grills möglich ist. Die tatsächliche Rauchentwicklung hängt somit ganz überwiegend vom Grillgut ab.

In jüngster Zeit werden beispielsweise in Parks oder öffentlichen Grünanlagen immer häufiger Grillverbote in Bezug auf die Verwendung von Holzkohle ausgesprochen. Brandgefahr, zunehmende Verschmutzung der Umgebung und vermeintlich stärkere CO₂-Emissionen eines Holzkohlegrills gegenüber einem Elektrogrill oder Gasgrill werden zur Begründung genannt. Häufig werden Picknick-Begeisterte erst vor Ort mit den ortsspezifischen Anforderungen bzw. Geboten und Verboten konfrontiert, oft dahingehend, dass die Benutzung eines ansonsten beliebten Holzkohlegrills nicht gestattet ist. Regelmäßig steht ein Grill mit alternativem Brenn-/Heizmedium nicht zur Verfügung, beispielsweise ein Gasgrill oder ein Elektrogrill. Ein Elektrogrill kommt ohnehin kaum in Frage, nämlich in Ermangelung eines Stromanschlusses oder eines hinreichend leistungsstarken Akkus.

Aus KR 2015 0000117 A ist ein gattungsgemäßer Grill oder Kocher bekannt, bei dem eine Holzkohle-Brenneinheit gegen eine Gas-Brenneinheit und umgekehrt austauschbar ist. Die Druckschrift hält sich bedeckt darüber, wie dies genau zu erfolgen hat. Vor allem bleiben dort sicherheitstechnische Aspekte unberücksichtigt.

Der Erfindung liegt nun die Aufgabe zugrunde, einen herkömmlichen Grill oder Kocher derart auszugestalten und weiterzubilden, dass er sich in bewährter Weise mit Holzkohle aber auch mit Gas betreiben lässt, und gleichzeitig den rechtlichen Bestimmungen gerecht wird. Der Grill oder Kocher soll einfach in der Konstruktion und bedienfreundlich sein. Außerdem soll er sich von wettbewerblichen Produkten unterscheiden.

Voranstehende Aufgabe ist durch einen Grill oder Kocher mit den Merkmalen des Anspruchs 1 gelöst. Danach ist als Brenneinheit wahlweise eine Holzkohle-Brenneinheit oder eine Gas-Brenneinheit, nebst spezifischer Anschlusselemente, einsetzbar, wobei bei entsprechend eingesetzter Brenneinheit über die Gasversorgungseinrichtung in die bzw. zur Holzkohle-Brenneinheit ein gerichteter Luftstrom oder in die bzw. zur Gas-Brenneinheit ein brennbares Gas leitbar ist, und wobei im Bodenbereich der Außenschale, unter der Trägerschale, vorzugsweise auf einer Bodenplatte, eine Wechselmechanik angeordnet ist, die sich ausschließlich bei entnommener Brennkammer betätigen lässt und auf deren Betätigung hin, nach Erreichen einer definierten Arbeitsposition für die jeweilige Brenneinrichtung, ein Einsetzen und eine Aktivierung der jeweiligen Brennkammer inklusive der spezifischen Anschlusselemente möglich ist.

Erfindungsgemäß ist erkannt worden, dass sich der bekannte Grill ganz besonders zum universellen Einsatz eignet, wenn eine mehr oder weniger herkömmliche Holzkohle-Brenneinheit und eine Gas-Brenneinheit, die mit geringem Aufwand gegeneinander austauschbar sind. Dies bedeutet, dass spezifische Anschlusselemente mit der jeweiligen Brenneinheit auszutauschen sind, so dass die Brenneinheit mit dem jeweiligen Brennstoff richtig funktioniert.

Entsprechend der eingesetzten Brenneinheit - herkömmliche Holzkohle-Brenneinheit oder Gas-Brenneinheit - ist diese wie gehabt über die Gasversorgungseinrichtung mit einem Fluidum versorgbar, im Konkreten dahingehend, dass im Falle der Holzkohle-Brenneinheit ein gerichteter Luftstrom und im Falle der Gas-Brenneinheit ein brennbares Gas in die Brenneinheit leitbar ist.

Zur Funktion des die Nutzung der Holzkohle-Brenneinheit betreffenden Systems sei auf EP 2 785 227 B1 verwiesen, deren Inhalt hiermit zur Offenbarung der hier zugrundeliegenden Erfindung gemacht wird.

Bei dem erfindungsgemäßen Grill oder Kocher handelt es sich um ein autarkes Gerät, welches zwei unterschiedliche Brenneinheiten umfasst, die zum Austausch bestimmt sind, wobei der Austausch händisch, vorzugsweise ohne Werkzeug, erfolgen kann. Entsprechend dem Bedarf kann zwischen einer Nutzung als Holzkohle-Grill oder als Gas-Grill gewählt werden, wodurch sich eine enorme Flexibilität des Grills oder Kochers ergibt. Es handelt sich somit um einen Hybrid-Grill.

Die Holzkohle-Brennkammer umfasst ein Gehäuse zur Aufnahme der Grillkohle. Das Gehäuse kann unterschiedlichst ausgeführt sein. Es ist vorzugsweise gelocht oder geschlitzt, so dass sich im Betrieb eine optimale Wärmeabstrahlung ergibt.

Der Boden des Gehäuses kann nach innen versetzt sein, so dass die Wandung, nach unten gerichtet, über den Boden hinausragt und unterhalb der eigentlichen Brennkammer eine Art Hohlraum gebildet ist. Der Boden ist gelocht, so dass die zum Anzünden und Abbrand erforderliche Luft durch den Boden hindurch in das Gehäuse zur Holzkohle strömen kann.

Das Gehäuse steht mit seinem unteren Randbereich auf oder in einer Anzündschale, in die hinein vor dem Anzünden eine Anzündpaste oder dergleichen gegeben wird. Die Anzündschale ist mittig in der Trägerschale positioniert, wobei mittig durch die Anzündschale ein Luftrohr in den zwischen dem Boden der Holzkohle-Brennkammer und der Anzündschale gebildeten Luftverteilungsraum ragt. Dieser Raum wird über einen im Bodenbereich der Außenschale angeordneten elektrischen Ventilator mit Luft versorgt, wobei der Ventilator in Bezug auf die zu fördernde Luftmenge gesteuert oder in Bezug auf die zu erzeugende Wärme regelt sein kann.

Zur weiteren Funktion und Ausgestaltung sei vollumfänglich auf EP 2 785 227 B1 verwiesen.

Die Holzkohle-Brennkammer umfasst einen vorzugsweise gelochten Deckel, der die durch den Abbrand erzeugte heiße Luft durch die Wandung der Holzkohle-Brennkammer radial nach außen zwingt. Außerdem ist die Holzkohle-Brennkammer aufgrund des Deckels, ggf. unter Nutzung einer dort mittig angebrachten Hebeöse, zwischen dem Grillrost und der Trägerschale festlegbar, nämlich durch Verspannen des Grillrosts. Eine unverrückbare Positionierung der Holzkohle-Brennkammer wird dadurch erreicht, wodurch der sichere Betrieb des Grills begünstigt ist.

Wie bereits zuvor ausgeführt, ist der erfindungsgemäße Grill oder Kocher mit einem Wechselsystem ausgestattet, umfasst dieser nämlich eine weitere Brenneinheit, die als Gas-Brennkammer im Sinne einer geschlossenen Einheit ausgeführt ist. Die Brennkammer der Gas-Brenneinheit ist ähnlich wie die Brennkammer der Holzkohle-Brenneinheit ausgestattet. So ist auch dort ein vorzugsweise gelochtes oder geschlitztes Gehäuse vorgesehen. Auch hier soll die radiale Wärmeabstrahlung begünstigt werden.

Die Gas-Brennkammer hat einen Boden, der wie bei der Holzkohle-Brennkammer nach innen versetzt sein kann. Dies ist jedoch nicht zwingend erforderlich.

Nahe dem Boden ist mittig im Gehäuse ein Gas-Brenner angeordnet, wie er beispielsweise bei Campingkochern verwendet wird. Der Gas-Brenner sitzt auf einem Gas-Steigrohr, welches sich durch den Boden der Gas-Brennkammer hindurch nach unterhalb und somit außerhalb der Gas-Brennkammer zu einer inneren Gasanschlusseinrichtung erstreckt. Die innere Gasanschlusseinrichtung ist über eine innere Gasleitung mit einer äußeren Gasanschlusseinrichtung zum unmittelbaren oder mittelbaren Anschluss einer Gasflasche oder dergleichen strömungsverbunden. Sämtliche Gasverbindungen sind gasdicht ausgeführt und verfügen über entsprechende Dichtmittel.

Das Gas-Steigrohr ist außerhalb der Gas-Brennkammer, vorzugsweise im unteren Bereich, mit einem durch eine Bohrung definierten oder im Strömungsquerschnitt veränderbaren Lufteinlass ausgestattet, um dem Verbrennungsgas, beispielsweise Butan oder Propan, Außenluft beizumengen und somit den Abbrand des Gases bzw. die Flamme zu beeinflussen.

Außerdem ist es von Vorteil, den Strömungsquerschnitt für das einströmende Gas, wo auch immer, beeinflussen zu können, um wiederum die Flamme und somit die Grill-Temperatur einstellen zu können.

In weiter vorteilhafter Weise ist in der Wandung der Gas-Brennkammer, in etwa auf Höhe des Gas-Brenners oder geringfügig darüber, eine Öffnung zum Einführen eines Zündmittels ausgebildet. So lässt sich das ausströmende Gas im einfachsten Falle per Streichholz oder langem Anzünder entzünden. Auch ist es denkbar, dass in die Gas-Brennkammer ein Piezo-Anzünder hineinragt, der dort stationär angebracht ist. Jedenfalls ist es denkbar, dass das Zündmittel elektrisch oder mechanisch oder kombiniert arbeitet.

Wie bei der Holzkohle-Brennkammer ist es auch bei der Gas-Brennkammer erforderlich, dass diese innerhalb der Trägerschale sicher sitzt. Dazu kann die Gas-Brennkammer einen unteren Sockel umfassen oder es kann ein separater Sockel vorgesehen sein, auf dem die Gas-Brennkammer sitzt. Der Sockel dient zur sicheren Positionierung der Gas-Brennkammer auf der Trägerschale, wobei dazu einzelne Standfüße oder ein ringförmiger geschlossener Standfuß ausgebildet sein kann. Der sichere Stand wird außerdem durch das Positionieren und Verschrauben des Gas-Steigrohrs sichergestellt, welches sich an der Trägerschale, einer Zwischenplatte und auf einer Bodenplatte abstützen kann. Auch ist es denkbar, dass das Gas-Steigrohr zwischen der Gas-Brennkammer und der inneren Gasanschlusseinrichtung durch eine Hülse abgestützt und geführt bzw. gehalten wird.

In weiter vorteilhafter Weise umfasst die Gas-Brennkammer einen fest mit dem Gehäuse der Brennkammer verbundenen, vorzugsweise gelochten Deckel, über den die Gas-Brennkammer zwischen dem Grillrost und der Trägerschale unverrückbar festlegbar ist. Diese Maßnahme entspricht der Festlegung der Holzkohle-Brennkammer, mit den gleichen Vorteilen.

Das zuvor erörterte Ausführungsbeispiel bezieht sich auf die Nutzung einer Gas-Brennkammer zum Grillen. Dies bedeutet, dass oberhalb der Gas-Brennkammer, wie auch bei der Holzkohle-Brennkammer, ein arretierbarer bzw. verspannbarer Grillrost vorgesehen ist. Darüber kann eine Art Reling zur umlaufenden Sicherung des Grillguts vorgesehen sein. Grillrost und Reling können einteilig ausgeführt sein.

Im Rahmen einer weiteren Ausführungsform des erfindungsgemäßen Kochers ist es denkbar, dass die Gas-Brenneinheit neben dem Gas-Brenner eine vorzugsweise umlaufende oder sektional ausgebildete Standfläche zur Positionierung eines Behältnisses umfasst, beispielsweise zum Positionieren eines Topfes, einer Pfanne oder dergleichen oberhalb des Gas-Brenners. In diesem Fall ist der Gas-Brenner unter der Ebene der Standfläche angeordnet, wobei sich, wie bei dem zuvor beschriebenen Ausführungsbeispiel von Gas-Brenner aus, ein Gas-Steigrohr durch die Standfläche und die Trägerschale hindurch nach unten zu einer inneren Gasanschlusseinrichtung erstreckt, die mit einer äußeren Gasanschlusseinrichtung zum unmittelbaren oder mittelbaren Anschluss einer Gasflasche oder dergleichen strömungsverbunden ist. Hier gelten die gleichen Ausführungen wie zu dem zuvor genannten Ausführungsbeispiel mit Gas-Brennkammer und Grillrost. Es ist von weiterem Vorteil, wenn bei der hier in Rede stehenden Ausführungsform die Gas-Brenneinheit eine Stützeinrichtung umfasst, mit der die Gas-Brenneinheit in der Trägerschale abstützend positioniert ist, zumal durch die Standfläche ein beispielsweise befüllter Kochtopf zu positionieren und zu halten ist. Entsprechend dient die Stützeinrichtung zur Versteifung und Stabilisierung der Anordnung, wobei der Gas-Brenner über das Gas-Steigrohr, ggf. einen Zwischenboden und über die innere Gasanschlusseinrichtung gehalten wird. Ein sicherer Stand ist im angeschlossenen und ggf. verschraubten Zustand des Gas-Brenners mit dem Gas-Steigrohr gewährleistet.

Weiterhin ist erkannt worden, dass zum sicheren Austausch und Betrieb es erforderlich ist, eine besondere Wechselmechanik vorzusehen, die sich bei entnommener Brennkammer betätigen lässt. Auf deren Betätigung hin ist nach Erreichen einer definierten Arbeitsposition für die jeweilige Brenneinrichtung ein Einsetzen und eine Aktivierung inklusive der spezifischen Anschlusselemente möglich. Dies bedeutet, dass bei entnommener Brennkammer die Art der einzusetzenden Brennkammer - Holzkohle-Brennkammer oder Gas-Brennkammer - durch Betätigung der Wechselmechanik ausgewählt werden kann, nämlich durch Erreichen einer definierten Arbeitsposition für die jeweilige Brennkammer.

Die Wechselmechanik kann sehr unterschiedlich ausgeführt sein. Bevorzugt umfasst die Wechselmechanik eine Schiebereinrichtung, die durch Betätigung von seitlich außerhalb oder unterhalb des Gehäuses von einer die Holzkohle-Brennkammer aufnehmenden/aktivierenden Position in eine die Gas-Brennkammer aufnehmenden/aktivierenden Position schiebbar oder schwenkbar ist. Die jeweils durch die Schiebereinrichtung eingestellte Position kann durch ein Anzeigeelement von außerhalb oder unterhalb des Gehäuses durch entsprechende Markierungen erkennbar sein.

Im Konkreten umfasst die Schiebereinrichtung einen Schieber, der in der Position zum Anschließen der Holzkohle-Brenneinheit eine das Gebläse und einen Luftleitraum bis hin zu einer Einstecköffnung des Lufteinlassrohres umfassende Luftanschlusseinheit trägt. In der Position zum Anschließen der Gas-Brenneinheit umfasst der Schieber einen gasabdichtenden Schraub- oder Steckanschluss für das Gas-Steigrohr mit innerem Gasanschluss und Strömungsverbindung zu dem äußeren Gasanschluss. Entsprechend der Position des Schiebers ist somit ein einfaches Einsetzen und damit einhergehend ein einfacher Anschluss entweder der Holzkohle-Brennkammer oder der Gas-Brennkammer möglich, im Falle der Holzkohle-Brennkammer mit quasi automatischem Anschluss der Luftversorgung und im Falle der Gas-Brennkammer mit quasi automatischem Anschluss der Versorgung des Gas-Brenners mit brennbarem Gas.

Zur einfachen Handhabung des erfindungsgemäßen Grills oder Kochers ist es von Vorteil, wenn die Wechselmechanik eine Verrastung oder Arretierung für die jeweilige Betriebsposition hat. Damit wird dem Benutzer das Gefühl einer ordnungsgemäßen Einstellung, jeweils nach Verrastung, vermittelt und ist zum "Umschalten" auf die jeweils andere Position eine gewisse Kraft zum Entrasten und abermaligen Verrasten in der jeweils anderen Position erforderlich.

Schließlich ist es von besonderem Vorteil, wenn in der die Holzkohle-Brennkammer aufnehmenden/aktivierenden Position der Wechselmechanik die äußere Gasanschlusseinrichtung automatisch bzw. zwangsweise gesperrt ist. Hier soll vermieden werden, dass bei angeschlossener Holzkohle-Brennkammer Gas in das Innere des Gehäuses geleitet wird. Die Sperrung kann mechanisch über die Schiebereinrichtung oder über eine separate Verschlusseinrichtung erfolgen, im einfachsten Falle dadurch, dass die Anschlussbuchse zum Einstecken/Einschrauben der Gasanschlussleitung von außerhalb an das Gehäuse blockiert ist. Erst wenn die Wechselmechanik sich in der Position zum Einsetzen der Gas-Brenneinheit befindet, ist der äußere Gasanschluss freigegeben und kann beispielsweise eine flexible Gasleitung mit herkömmlichen Anschlussmitteln abdichtend in eine Gasanschlussbuchse gesteckt und ggf. verschraubt werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Sprengdarstellung die wesentlichen "äußeren" Bestandteile des erfindungsgemäßen Grills, ohne Darstellung der konkreten Brennkammer,
- Fig. 2: in einer schematischen Ansicht, teilweise geschnitten, den erfindungsgemäßen Grill mit eingesetzter Holzkohle-Brennkammer,
- Fig. 3: in einer schematischen Ansicht, teilweise geschnitten, den erfindungsgemäßen Grill mit eingesetzter Gas-Brennkammer,
- Fig. 4: in einer schematischen Ansicht, teilweise geschnitten, ein Ausführungsbeispiel eines erfindungsgemäßen Kochers mit eingesetztem Gas-Brenner,
- Fig. 5: in einer schematischen Ansicht, von außen und im Detail von innen, den äußeren Gasanschluss mit innerer Sperreinrichtung im geöffneten Zustand,
- Fig. 6: in einer schematischen Ansicht, von außen und im Detail von innen, den äußeren Gasanschluss mit innerer Sperreinrichtung im gesperrten Zustand.

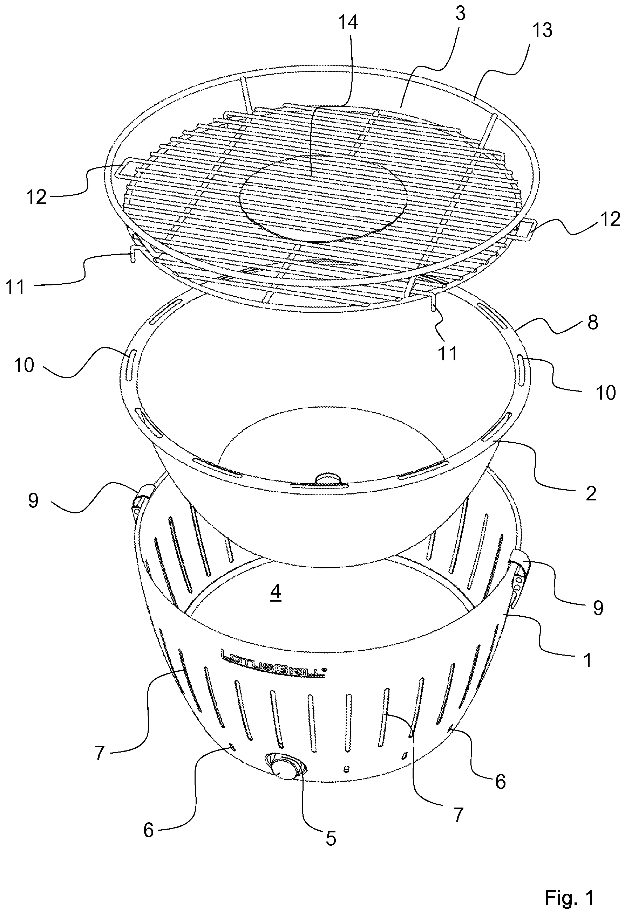

Fig. 1 zeigt in einer schematischen Sprengdarstellung die "äußeren" Bestandteile des erfindungsgemäßen Grills, nämlich, von unten beginnend, das Gehäuse 1, die in das Gehäuse 1 einsetzbare Trägerschale 2 und den darüber anordenbaren Grillrost 3.

Des Weiteren lässt Fig. 1 erkennen, dass das Gehäuse 1 im unteren Bereich einen Innenboden 4 im Sinne eines Zwischenbodens aufweist, unter dem oder auf dem elektrische und ggf. mechanische Komponenten angeordnet sein können. Von außerhalb des Gehäuses 1 ist ein Drehknopf 5 erkennbar, der zum Ein- und Ausschalten sowie zur Regulierung eines unter dem Innenboden 4 angeordneten Gebläses dient.

In der Wandung des Gehäuses 1 sind untere Durchgänge 6 vorgesehen, die zum Ansaugen von Außenluft dienen. Obere Durchgänge 7 dienen zur Hinterlüftung des Raums zwischen der Trägerschale 2 und dem Gehäuse 1.

Die Trägerschale 2 wird mit ihrem Randbereich 8 auf den freien Rand des Gehäuses 1 aufgesetzt und dort mittels Spannvorrichtungen 9, die am Grillrost 3 angreifen, festgelegt. Letztendlich handelt es sich bei den Spannvorrichtungen 9 um beidseitig angreifende Klammern, die den Grillrost 3 und somit auch die Trägerschale 2 fest mit dem Gehäuse 1 verbinden.

Im Randbereich 8 der Trägerschale 2 sind Ausnehmungen 10 vorgesehen, die zum positionierenden Einstecken von Füßen 11 des Grillrosts 3 dienen. Durch diese Maßnahme lässt sich der Grillrost 3 in idealer Weise positionieren, wobei die Spannvorrichtungen 9 bzw. die dort vorgesehenen Spannklammern in seitliche Befestigungslaschen 12 am Grillrost 3 greifen. Durch Spannen der Spannvorrichtungen 9 wird der Grillrost 3 fest mit dem Gehäuse 1 verbunden, und zwar unter Zwischenschaltung der Trägerschale 2, die dabei gleicher maßen fixiert wird. In der zusammengebauten Position ist zwischen dem Gehäuse 1 und der Trägerschale 2 ein wärmeisolierender Luftraum geschaffen, der über die oberen Durchgänge 7 hinterlüftet ist. Die Ausnehmungen 10 im oberen Randbereich der Trägerschale 2 dienen einerseits zum Einstecken von Füßen 11 des Grillrosts 3 und andererseits zum Entweichen warmer/heißer Luft aus dem Inneren des Gehäuses 1, genauer gesagt aus dem Bereich zwischen dem Gehäuse 1 und der Trägerschale 2. Die Ausnehmungen 10 begünstigen somit die Hinterlüftung.

Der Grillrost 3 umfasst eine umlaufende Reling 13 und ist mittig mit einer geschlossenen, gewellten Grillfläche 14 versehen, deren Randbereich zum Abtropfen von Fett zumindest geringfügig nach unten abfallend ausgebildet sein kann.

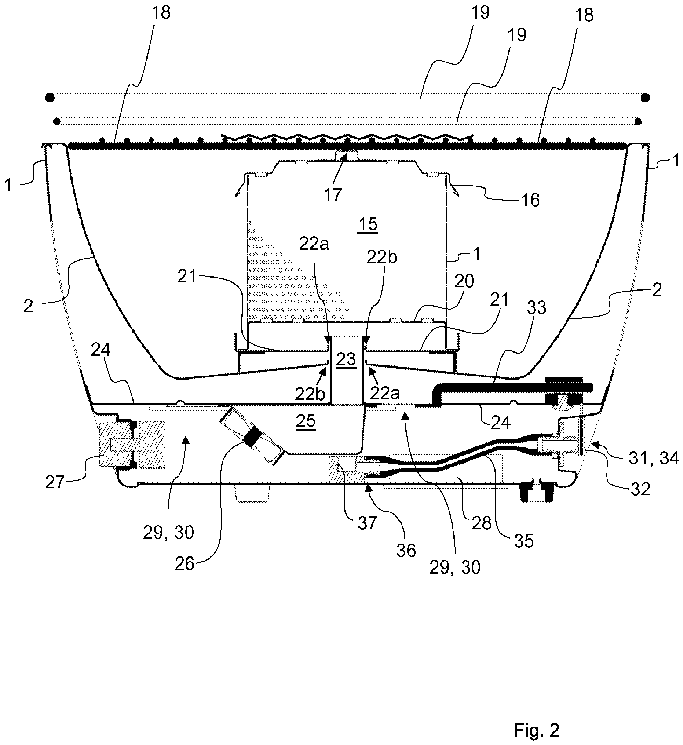

Fig. 2 zeigt den erfindungsgemäßen Grill mit eingesetzter Holzkohle-Brennkammer 15. Die Holzkohle-Brennkammer 15 hat eine gelochte Wandung und ist mit einem Deckel 16 geschlossen. Der Deckel 16 ist mit einer Hebeöse 17 ausgestattet, die von unten her zur Anlage an einem Grillrost 18 dient. Oberhalb des Grillrosts 18 ist eine doppelte Reling 19 zur seitlichen Sicherung des Grillguts vorgesehen.

Die Holzkohle-Brennkammer 15 hat einen gelochten Boden 20, wobei die Lochung zum Einströmen von Außenluft in das Innere der Holzkohle-Brennkammer dient.

Des Weiteren ist unterhalb der Holzkohle-Brennkammer 15 eine Anzündschale 21 vorgesehen, die mit einer Anzündpaste belegt werden kann. Die Holzkohle-Brennkammer 15 steht mit dem unteren Rand in der Anzündschale 21 und ist dort mehr oder weniger unverrückbar.

Mittig in der Anzündschale 21 ist ein Durchgang 22a vorgesehen, durch den sich ein Lufteinlassrohr 23 durch die Trägerschale 2 hindurch zu einem Zwischenboden 24 erstreckt. Im Zwischenboden 24 ist ebenfalls ein Durchgang 22b vorgesehen, wonach der Zwischenboden 24 in einen Luftraum 25 öffnet, der über einen Ventilator 26 mit Außenluft versorgt wird. Mit anderen Worten sind die Anzündschale 21 und die Trägerschale 2 auf das Lufteinlassrohr 23, um dieses herum, aufgesteckt. Der Zwischenboden 24 öffnet in einen Luftraum 25, der über einen Ventilator 26 mit Außenluft versorgt wird. Der Ventilator 26 lässt sich über einen Schalter 27 von außerhalb des Gehäuses 1 bedienen. Zur Stromversorgung sind Batterien oder Akkus in einem Batteriefach 28 vorgesehen.

Fig. 2 zeigt außerdem die Vorkehrung einer Schiebereinrichtung 29, über die ein Schieber 30 verschiebbar ist. Bei dem in Fig. 2 gezeigten Zustand befindet sich der Schieber 30 in der die Luftströmung aus dem Luftraum 25 zum Lufteinlassrohr 23 freigebenden Position. Die externe Gasanschlusseinrichtung 31 ist ein Sperrelement 32 gesperrt, wobei das Sperrelement 32 durch beispielsweise durch händische Betätigung in die sperrende Position gemäß Fig. 2 verbracht ist. Die Stange 33 dient zur Betätigung bzw. Verschiebung der Schiebereinrichtung 29 bzw. des Schiebers 30.

In Bezug auf den in Fig. 2 durch die Schiebervorrichtung 29 nicht aktivierten Gasanschluss zeigt Fig. 2 die externe Gasanschlusseinrichtung 31 im durch das Sperrelement 32 blockierten Zustand, den äußeren Gasanschluss 34, eine innere Gasanschlussleitung 35 und einen inneren Gasanschluss 36, der, um 90° abgewinkelt bzw. gedreht, ein Innengewinde 37 zum Einsetzen und Einschrauben eines in Fig. 2 nicht gezeigten Gas-Steigrohrs umfasst.

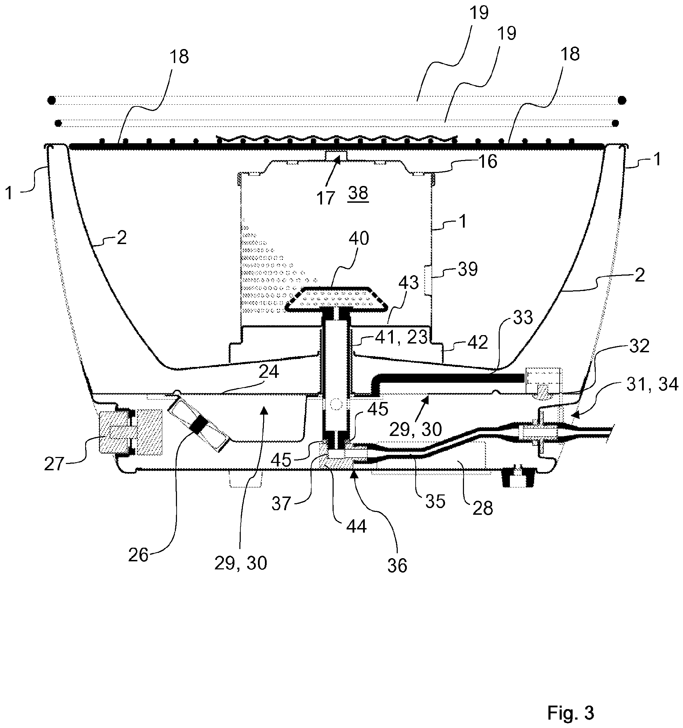

Fig. 3 zeigt den erfindungsgemäßen Grill mit eingesetzter Gas-Brennkammer 38. Die Gas-Brennkammer 38 umfasst wie auch die Holzkohle-Brennkammer ein gelochtes Gehäuse 1 mit aufgesetztem Deckel 16, wobei der Deckel 16 fest mit dem Gehäuse 1 verbunden ist. Oberhalb des Deckels 16 bzw. oberhalb einer Hebeöse 17 ist der Grillrost 18 mit der Reling 19 angeordnet, wodurch die Gas-Brennkammer 38 gesichert ist.

Des Weiteren umfasst die Gas-Brennkammer 38 im unteren Bereich eine Öffnung 39, durch die hindurch das Gas von außerhalb gezündet werden kann.

Innerhalb der Gas-Brennkammer 38 ist ein Gas-Brenner 40 angeordnet, der über ein Gas-Steigrohr 41 mit Gas versorgt wird. Die Verbindung zwischen dem Gas-Steigrohr 41 und dem Gas-Brenner 40 ist gasdicht ausgeführt.

Gemäß der Darstellung in Fig. 3 steht die Gas-Brennkammer 38 auf der Trägerschale 2 und ist dort mittels einer Stützeinrichtung 42 positioniert. Die Stützeinrichtung 42 kann integraler Bestandteil der Gas-Brennkammer 38 sein, insbesondere des dort nach innen versetzten Bodens 43.

Das Gas-Steigrohr 41 erstreckt sich vom Gas-Brenner 40 aus durch den Boden 43 der Gas-Brennkammer 38, durch einen mittigen Durchgang in der Trägerschale 2 und durch einen Zwischenboden 24, der die Schiebereinrichtung 29 umfasst bzw. trägt. Die Schiebereinrichtung 29 bzw. der Schieber 30 befindet sich in der zum Anschluss der Gas-Brennkammer 38 dienenden Position, so dass das Gas-Steigrohr 41 in einen Anschlussblock 44 des inneren Gasanschlusses 36 einschraubbar ist. Geeignete Dichtmittel 45 können zwischengeschaltet sein.

Von außerhalb des Gehäuses 1, d.h. über eine externe Gasanschlusseinrichtung 31, kann das von einem Gastank, beispielsweise einer Kartusche, einer Gaspatrone, etc. kommende Gas, ggf. unter Zwischenschaltung eines Reglers, einströmen und gelangt über den vorgesehenen Strömungspfad zum Gas-Brenner 40.

Fig. 3 zeigt darüber hinaus, dass sich das Sperrelement 32 in der geöffneten Position befindet. Mittels der Stange 33 ist der Schieber 30 bzw. die Sperreinrichtung 29 in die für den Anschluss der Gas-Brennkammer 38 geeigneten Position verbracht. In dieser Position dient das Lufteinlassrohr 23 als Gas-Steigrohr 41.

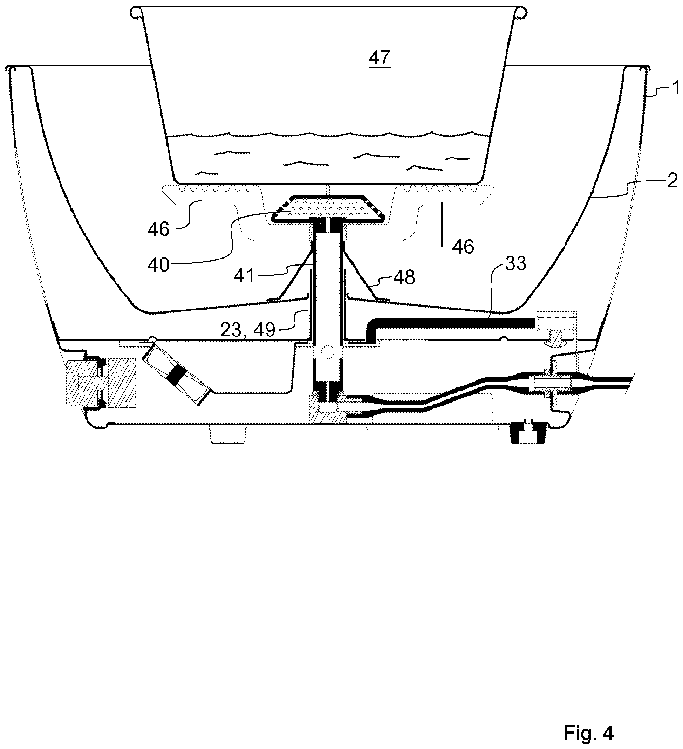

Fig. 4 zeigt ein weiteres Ausführungsbeispiel bei eingesetztem Gas-Brenner 40, ohne die Vorkehrung einer Gas-Brennkammer.

Um den Gas-Brenner 40 herum ist eine Standfläche 46 vorgesehen, die einzelne Standflächenelemente, beispielsweise fingerartig ausgebildet, umfassen kann. Die Standfläche 46 dient zur Positionierung eines Topfes 47. Mittig im Bereich der Standfläche 46 ist der Gas-Brenner 40 tieferliegend angeordnet, der wiederum von einem Gas-Steigrohr 41 getragen wird. Zur Stabilisierung gegenüber der Trägerschale 2 ist ein besonderes Stützelement 48 vorgesehen, welches unmittelbar am Gas-Steigrohr 41 oder an einer das Gas-Steigrohr 41 umgebenden Hülse 49 befestigt sein kann.

In Bezug auf die Anbindung an eine externe Gasversorgung bzw. an einen Gasspeicher sowie in Bezug auf den Strömungspfad des Gases und schließlich auch in Bezug auf die Funktion der Schiebereinrichtung sei zur Vermeidung von Wiederholungen auf die Figurenbeschreibung von Fig. 3 verwiesen.

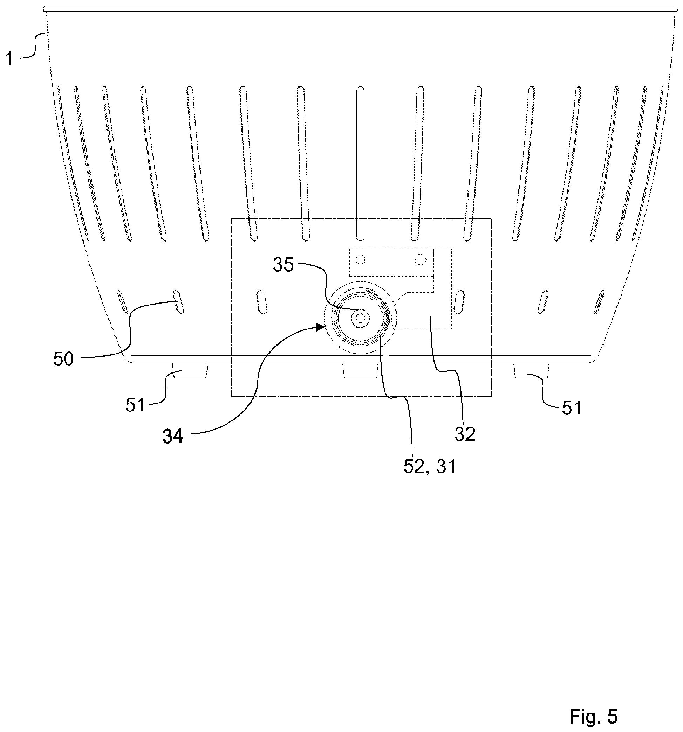

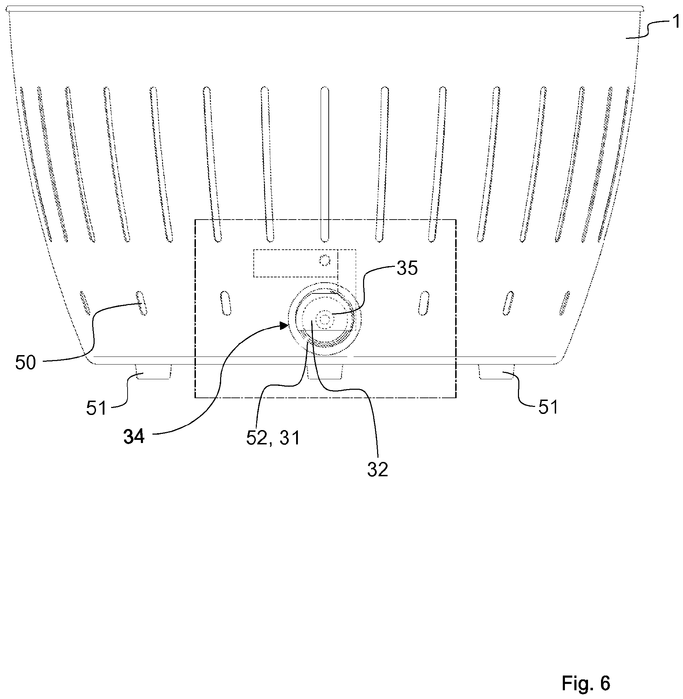

Die Fig. 5 und 6 zeigen zum Teil eine Außenansicht des Gehäuses 1 mit Lüftungsschlitzen 50. Das Gehäuse 1 ist auf Standnoppen 51 positioniert. Diese können, zumindest teilweise, höhenverstellbar sein.

Die Fig. 5 und 6 zeigen von außerhalb des Gehäuses 1 den externen Gasanschluss 34 mit einer Gasanschlussbuchse 52 zum verrastenden Einstecken oder Einschrauben eines herkömmlichen Gasanschlusses mit Gasanschlussleitung. Gemäß der Darstellung in Fig. 5 ist aufgrund der nicht gezeigten Schieberposition das Sperrelement 32 abseits des Einsteckbereichs. Die Gasanschlussbuchse 52 ist somit frei und es kann ein externes Gasanschlusselement eingesteckt werden.

Fig. 6 zeigt dagegen die Gasanschlussbuchse 52 im gesperrten Zustand, wonach die externe Gasanschlusseinrichtung 31 über das Sperrelement 32 geschlossen ist.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Gehäuse
- 2: Trägerschale
- 3: Grillrost
- 4: Innenboden (des Gehäuses)
- 5: Drehknopf (des Schalters/Reglers)
- 6: unterer Durchgang (in der Wandung des Gehäuses)
- 7: oberer Durchgang (in der Wandung des Gehäuses)
- 8: Randbereich (der Trägerschale)
- 9: Spannvorrichtung (zum Verspannen des Grillrosts)
- 10: Ausnehmung im oberen Randbereich der Trägerschale zum Einstecken von Füßen des Grillrosts und zur Lüftung
- 11: Fuß am Grillrost
- 12: Befestigungslasche am Grillrost
- 13: Reling am Grillrost
- 14: Grillfläche, mittig auf dem Grillrost
- 15: Holzkohle-Brennkammer
- 16: Deckel (von 15)
- 17: Hebeöse (von 16)
- 18: Grillrost
- 19: Reling
- 20: Boden (von 15)
- 21: Anzündschale
- 22a: Durchgang in Anzündschale
- 22b: Durchgang in Trägerschale
- 23: Lufteinlassrohr
- 24: Zwischenboden
- 25: Luftraum (Airbox)
- 26: Ventilator
- 27: Schalter (für 26)
- 28: Batteriefach
- 29: Schiebereinrichtung
- 30: Schieber
- 31: externe Gasanschlusseinrichtung
- 32: Sperrelement
- 33: Stange (zur Betätigung / zum Sperren)
- 34: äußerer Gasanschluss
- 35: Gasanschlussleitung
- 36: innerer Gasanschluss
- 37: Innengewinde (von 36)
- 38: Gas-Brennkammer
- 39: Öffnung (von 38)
- 40: Gas-Brenner
- 41: Gas-Steigrohr
- 42: Stützeinrichtung (für 40)
- 43: Boden (von 38)
- 44: Anschlussblock (mit innerem Gasanschluss 36)
- 45: Dichtmittel (in 44)
- 46: Standfläche (für 47)
- 47: Topf
- 48: Stützelement
- 49: Hülse, Lufteinlassrohr (fest, dient auch als Stütze)
- 50: Luftschlitze (in 1)
- 51: Standnoppen, Füße
- 52: Gasanschlussbuchse (außen)

## Patentansprüche

1. Grill oder Kocher, mit einer als Gehäuse (1) dienenden Außenschale, einer innerhalb der Außenschale allseitig mit Abstand angeordneten Trägerschale (2), einer innerhalb der Trägerschale (2) stehenden Brenneinheit, einem oberhalb der Brenneinheit angeordneten Grillrost (3) oder Behältnis, und einer Gasversorgungseinrichtung, die von unterhalb der Trägerschale (2) einen Fluidstrom zur oder in die Brenneinheit erzeugt, wobei als Brenneinheit wahlweise eine Holzkohle-Brenneinheit oder eine Gas-Brenneinheit, nebst spezifischer Anschlusselemente, einsetzbar ist, wobei bei entsprechend eingesetzter Brenneinheit über die Gasversorgungseinrichtung in die bzw. zur Holzkohle-Brenneinheit ein gerichteter Luftstrom oder in die bzw. zur Gas-Brenneinheit ein brennbares Gas leitbar ist, **dadurch gekennzeichnet, dass** im Bodenbereich der Außenschale, unter der Trägerschale (2), vorzugsweise auf einer Bodenplatte, eine Wechselmechanik angeordnet ist, die sich ausschließlich bei entnommener Brennkammer betätigen lässt und auf deren Betätigung hin, nach Erreichen einer definierten Arbeitsposition für die jeweilige Brenneinrichtung, ein Einsetzen und eine Aktivierung der jeweiligen Brennkammer inklusive der spezifischen Anschlusselemente möglich ist.

2. Grill oder Kocher nach Anspruch 1, **dadurch gekennzeichnet, dass** die Brenneinheit als Holzkohle-Brennkammer (15) ausgeführt ist und ein vorzugsweise gelochtes oder geschlitztes Gehäuse (1) und einen gelochten, vorzugsweise nach innen versetzten Boden umfasst, wobei das Gehäuse (1) mit einem unteren Randbereich auf oder in einer Anzündschale (21) steht, wobei die Anzündschale (21) mittig in der Trägerschale (2) positioniert ist, und wobei mittig durch die Anzündschale (21) ein Lufteinlassrohr (23) in einen zwischen dem Boden der Holzkohle-Brennkammer (15) und der Anzündschale (21) gebildeten Anzünd- und Luftverteilungsraum ragt, welcher über einen im Bodenbereich der Außenschale angeordneten elektrischen Ventilator (26) mit Luft versorgt wird.

3. Grill oder Kocher nach Anspruch 2, **dadurch gekennzeichnet, dass** die Holzkohle-Brennkammer (15) einen vorzugsweise gelochten Deckel (16) umfasst, über den die Holzkohle-Brennkammer (15) zwischen dem Grillrost (3) und der Trägerschale (2), durch Verspannen des Grillrosts (3), unverrückbar festlegbar ist.

4. Grill oder Kocher nach Anspruch 1, **dadurch gekennzeichnet, dass** die Brenneinheit als Gas-Brennkammer (38) im Sinne einer geschlossenen Einheit mit einem vorzugsweise gelochten oder geschlitzten Gehäuse (1), einem Boden und einem im Gehäuse (1) mittig am Boden angeordneten Gas-Brenner (40) ausgeführt ist, von dem sich ein Gas-Steigrohr (41) durch den Boden hindurch nach außerhalb der Gas-Brennkammer (38) zu einer inneren Gasanschlusseinrichtung (36) erstreckt, die mit einer äußeren Gasanschlusseinrichtung (34) zum unmittelbaren oder mittelbaren Anschluss einer Gasflasche oder dgl. strömungsverbunden ist.

5. Grill oder Kocher nach Anspruch 4, **dadurch gekennzeichnet, dass** in der Wandung der Gas-Brennkammer (38), in etwa auf Höhe des Gas-Brenners (40), eine Öffnung zum Einführen eines Zündmittels ausgebildet ist.

6. Grill oder Kocher nach Anspruch 5 **dadurch gekennzeichnet, dass** das Zündmittel als elektrisch oder mechanisch arbeitendes Zündmittel ausgeführt ist.

7. Grill oder Kocher nach einem der Ansprüche 4 bis 6, **dadurch gekennzeichnet, dass** die Gas-Brennkammer (38) auf einem Sockel sitzt, der zur sicheren Positionierung der Gas-Brennkammer (38) auf der Trägerschale (2) ausgebildet ist.

8. Grill oder Kocher nach einem der Ansprüche 4 bis 7, **dadurch gekennzeichnet, dass** die Gas-Brennkammer (38) einen fest mit der Brennkammer verbundenen, vorzugsweise gelochten Deckel (16) umfasst, über den die Gas-Brennkammer (38) zwischen dem Grillrost (3) und der Trägerschale (2) unverrückbar festlegbar ist.

9. Grill oder Kocher nach Anspruch 1, **dadurch gekennzeichnet, dass** die Gas-Brenneinheit einen Gas-Brenner und eine vorzugsweise umlaufende Standfläche zur Positionierung eines Behältnisses, beispielsweise eines Topfes, einer Pfanne oder dgl. umfasst, wobei der Gasbrenner unter der Ebene der Standfläche (46) angeordnet ist, wobei sich ein Gas-Steigrohr (41) durch die Trägerschale (2) hindurch zu einer inneren Gasanschlusseinrichtung erstreckt, die mit einer äußeren Gasanschlusseinrichtung zum unmittelbaren oder mittelbaren Anschluss einer Gasflasche oder dgl. strömungsverbunden ist.

10. Grill oder Kocher nach Anspruch 9, **dadurch gekennzeichnet, dass** die Gas-Brenneinheit eine Stützeinrichtung (42) umfasst, mit der die Gas-Brenneinheit in der Trägerschale (2) abstützend positionierbar ist.

11. Grill oder Kocher nach einem der Ansprüche 1 bis 10, **dadurch gekennzeichnet, dass** die Wechselmechanik eine Schiebereinrichtung (29) umfasst, die durch Betätigung von innerhalb, seitlich außerhalb oder unterhalb des Gehäuses (1) von einer die Holzkohle-Brennkammer (15) aufnehmenden/aktivierenden Position in eine die Gas-Brennkammer (38) aufnehmenden/aktivierenden Position schiebbar oder schwenkbar ist.

12. Grill oder Kocher nach Anspruch 11, **dadurch gekennzeichnet, dass** die Schiebereinrichtung (29) einen Schieber umfasst, der in der Position zum Anschließen der Holzkohle-Brenneinheit eine das Gebläse und einen Luftleitraum bis hin zu einer Einstecköffnung des Lufteinlassrohrs umfassende Luftanschlusseinheit trägt und in der Position zum Anschließen der Gas-Brenneinheit einen gasabdichtendenden Schraub- oder Steckanschluss für das Gas-Steigrohr (40) mit innerem Gasanschluss und Strömungsverbindung zu dem äußeren Gasanschluss umfasst.

13. Grill oder Kocher nach einem der Ansprüche 1 bis 12, **dadurch gekennzeichnet, dass** die Wechselmechanik eine Verrastung oder Arretierung für die jeweilige Betriebsposition umfasst.

14. Grill oder Kocher nach einem der Ansprüche 1 bis 13, **dadurch gekennzeichnet, dass** in der die Holzkohle-Brennkammer (15) aufnehmenden/aktivierenden Position der Wechselmechanik die äußere Gasanschlusseinrichtung, vorzugsweise mechanisch, über die Schiebereinrichtung (29) oder über eine separate Verschlusseinrichtung, automatisch gesperrt ist.

## Claims

1. A barbecue or cooker having an outer shell which serves as a housing (1); a support shell (2) arranged inside the outer shell and being distanced there-from on all sides; a burner unit located inside the support shell (2); a barbecue grate (3) or container arranged above the burner unit; and a gas supply device which generates a fluid flow toward or into the burner unit from below the support shell (2),
whereas a wood charcoal burner unit or a gas burner unit, together with specific attachment elements, can optionally be used as the burner unit, wherein, when the burner unit is used accordingly, a directed air flow can be conducted into or toward the wood charcoal burner unit or flammable gas can be conducted into or toward the gas burner unit via the gas supply device, **characterized in that**
in the floor region of the outer shell, under the support shell (2), preferably on a floor plate, an exchange mechanism is arranged, which can only be actuated when the burner chamber is removed, and, upon the actuation thereof, after reaching a defined working position for the respective burner device, an insertion and activation of the respective burner chamber, including the specific attachment elements, is possible.

2. The barbecue or cooker according to claim 1, **characterized in that** the burner unit is designed as a wood charcoal burner chamber (15) and comprises 3 preferably perforated or slitted housing (1) and a perforated floor which is offset inwardly, wherein the housing (1) stands with a lower edge region on or in an ignition shell (21), wherein the ignition shell (21) is positioned centrally in the support shell (2), and wherein an air inlet pipe (23) projects centrally through the ignition shell (21) into an ignition and airbox formed between the floor of the wood charcoal burner chamber (15) and the ignition shell (21), which pipe is supplied with air via an electric ventilator (26) arranged in the floor region of the outer shell.

3. The barbecue or cooker according to claim 2, **characterized in that** the wood charcoal burner chamber (15) comprises 3 preferably perforated lid (16), via which the wood charcoal burner chamber (15) can be fixed in a non-slipping manner between the barbecue grate (3) and the support shell (2) by bracing the barbecue grate (3).

4. The barbecue or cooker according to claim 1, **characterized in that** the burner unit is designed as a gas burner chamber (38) in the sense of a closed unit having a preferably perforated or slitted housing (1), a floor, and a gas burner (40) arranged centrally on the floor in the housing (1), from which burner a gas rising pipe (41) extends through the floor to an inner gas attachment device (36) outside the gas burner chamber (38), which device is fluidly connected to an outer gas attachment device (34) for the direct or indirect attachment of a gas cylinder or the like.

5. The barbecue or cooker according to claim 4, **characterized in that** an opening for introducing an ignition means is configured in the wall of the gas burner chamber (38), approximately at the level of the gas burner (40).

6. The barbecue or cooker according to claim 5, **characterized in that** the ignition means is designed as an electrically or mechanically operating ignition means.

7. The barbecue or cooker according to any one of claims 4 to 6, **characterized in that** the gas burner chamber (38) sits on a pedestal designed for the secure positioning of the gas burner chamber (38) on the support shell (2).

8. The barbecue or cooker according to any one of claims 4 to 7, **characterized in that** the gas burner chamber (38) comprises a lid (16), which is fixedly attached to the burner chamber and preferably perforated, via which the gas burner chamber (38) can be fixed in a non-slipping manner between the barbecue grate (3) and the support shell (2).

9. The barbecue or cooker according to claim 1, **characterized in that** the gas burner unit comprises a gas burner and a preferably circumferential standing base for positioning a container, for example a pot, of a shell or the like, wherein the gas burner is arranged below the level of the standing base (46), wherein a gas rising pipe (41) extends through the support shell (2) to an inner gas attachment device, which device is fluidly connected to an outer gas attachment device for the direct or indirect attachment of a gas cylinder or the like.

10. The barbecue or cooker according to claim 9, **characterized in that** the gas burner unit comprises a support device (42) with which the gas burner unit can be positioned in the support shell (2) in a supporting manner.

11. The barbecue or cooker according to claim 10, **characterized in that** the exchange mechanism comprises a sliding device (29), which can be slid or pivoted, by actuation from inside, laterally outside, or below the housing (1), from a position so as to receive/activate the wood charcoal burner chamber (15) into a position so as to receive/activate the gas burner chamber (38).

12. The barbecue or cooker according to claim 11, **characterized in that** the sliding device (29) comprises a slider, which, in the position for attachment of the wood charcoal burner unit, supports an air attachment unit comprising the fan and an airbox up to an insertion opening of the air inlet pipe and, in the position for attachment of the gas burner unit, comprises a gas-sealing screw or plug attachment for the gas rising pipe (40) with an inner gas attachment and a fluid connection to the outer gas attachment.

13. The barbecue or cooker according to any one of claims 11 to 12, **characterized in that** the exchange mechanism comprises a latching or locking for the respective operating position.

14. The barbecue or cooker according to any one of claims 11 to 13, **characterized in that**, in the position of the exchange mechanism so as to receive/activate the wood charcoal burner chamber (15), the outer gas attachment device is automatically blocked, preferably mechanically, via the sliding device (29) or via a separate closure device.

## Revendications

1. Grill ou cuisinière avec une coque externe servant de boîtier (1), une coque de support (2) disposée, de manière distante de tous les côtés, à l'intérieur de la coque externe, une unité de combustion disposée à l'intérieur de la coque de support (2), une grille de cuisson (3) ou un récipient disposé au-dessus de l'unité de combustion et un dispositif d'alimentation en gaz qui génère, à partir de dessous la coque de support (2), un flux de gaz vers ou dans l'unité de combustion, dans lequel, l'unité de combustion utilisée peut être une unité de combustion au charbon de bois ou une unité de combustion au gaz, avec des éléments de raccordement spécifiques, dans lequel, dans l'unité de combustion utilisée respectivement, le dispositif d'alimentation en gaz permet de conduire un flux d'air orienté dans ou vers l'unité de combustion au charbon de bois ou un flux de gaz orienté dans ou vers l'unité de combustion à gaz, **caractérisé en ce que**, au fond de la coque externe, sous la coque de support (2), de préférence sur une plaque de fond, est disposé un mécanisme de changement qui peut être actionné exclusivement lorsque la chambre de combustion est retirée et, lors de son actionnement, après avoir atteint une position de travail définie pour le dispositif de combustion respectif, il est possible d'insérer et d'activer la chambre de combustion respective y compris les éléments de raccordement spécifiques.

2. Grill ou cuisinière selon la revendication 1, **caractérisé en ce que** l'unité de combustion est conçue comme une chambre de combustion au charbon de bois (15) et comprend un boîtier (1), de préférence perforé ou fendu et un fond perforé, de préférence décalé vers l'intérieur, dans lequel le boîtier (1) se dresse, avec une partie de bord inférieure, sur ou dans une coque d'allumage (21), dans lequel la coque d'allumage (21) est positionnée de manière centrale dans la coque de support (2) et dans lequel, au centre, à travers la coque d'allumage (21), passe un tuyau d'entrée d'air (23) vers un compartiment d'allumage et de distribution d'air formée entre le fond de la chambre de combustion au charbon de bois (15) et la coque d'allumage (21), qui est alimenté en air par l'intermédiaire d'un ventilateur électrique (26) disposé dans le fond de la coque externe.

3. Grill ou cuisinière selon la revendication 2, **caractérisé en ce que** la chambre de combustion au charbon de bois (15) comprend un couvercle (16), de préférence perforé, par l'intermédiaire duquel la chambre de combustion au charbon de bois (15) peut être fixée de manière inamovible entre la grille de cuisson (3) et la coque de support (2), par serrage de la grille de cuisson (3).

4. Grill ou cuisinière selon la revendication 1, **caractérisé en ce que** l'unité de combustion est conçue comme une chambre de combustion au gaz (38) au sens d'une unité fermée avec un boîtier (1), de préférence perforé ou fendu, un fond et un brûleur à gaz (40) disposé dans le boîtier (1), au centre, sur le fond, à partir duquel s'étend un tuyau ascendant de gaz (41) à travers le fond vers l'extérieur de la chambre de combustion à gaz (38) vers un dispositif de raccordement de gaz interne (36) qui est relié en écoulement avec un dispositif de raccordement de gaz externe (34) pour le raccordement direct ou indirect d'une bouteille de gaz ou autre.

5. Grill ou cuisinière selon la revendication 4, **caractérisé en ce que**, dans la paroi de la chambre de combustion à gaz (38), environ à la hauteur du brûleur de gaz (40), est réalisée une ouverture pour l'introduction d'un moyen d'allumage.

6. Grill ou cuisinière selon la revendication 5, **caractérisé en ce que** le moyen d'allumage est conçu comme un moyen d'allumage électrique ou mécanique.

7. Grill ou cuisinière selon l'une des revendications 4 à 6, **caractérisé en ce que** la chambre de combustion à gaz (38) repose sur un socle qui est conçu pour le positionnement sécurisé de la chambre de combustion à gaz (38) sur la coque de support (2).

8. Grill ou cuisinière selon l'une des revendications 4 à 7, **caractérisé en ce que** la chambre de combustion à gaz (38) comprend un couvercle (16), de préférence perforé, relié fermement avec la chambre de combustion, par l'intermédiaire duquel la chambre de combustion à gaz (38) peut être fixée de manière inamovible entre la grille de cuisson (3) et la coque de support (2).

9. Grill ou cuisinière selon la revendication 1, **caractérisé en ce que** l'unité de combustion à gaz comprend un brûleur de gaz et une surface d'appui, de préférence circulaire, pour le positionnement d'un récipient, par exemple d'une casserole, d'une poêle ou autre, dans lequel le brûleur de gaz est disposé sous le plan de la surface d'appui (46), dans lequel un tuyau ascendant de gaz (41) s'étend à travers la coque de support (2) vers un dispositif de raccordement de gaz interne, qui est relié en écoulement avec un dispositif de raccordement de gaz externe pour le raccordement direct ou indirect d'une bouteille de gaz ou autre.

10. Grill ou cuisinière selon la revendication 9, **caractérisé en ce que** l'unité de combustion à gaz comprend un dispositif d'appui (42) avec lequel l'unité de combustion à gaz peut être positionnée en appui dans la coque de support (2).

11. Grill ou cuisinière selon l'une des revendications 1 à 10, **caractérisé en ce que** le mécanisme de changement comprend un dispositif de poussée (29) qui, du fait de son actionnement de l'intérieur, peut être poussé ou pivoté latéralement à l'extérieur ou en dessous du boîtier (1), d'une position de logement/activation de la chambre de combustion à charbon de bois (15) vers une position de logement/activation de la chambre de combustion à gaz (38).

12. Grill ou cuisinière selon la revendication 11, **caractérisé en ce que** le dispositif de poussée (29) comprend un coulisseau qui, dans la position pour le raccordement de l'unité de combustion à charbon de bois, comprend une unité de raccordement d'air comprenant le ventilateur et un compartiment de guidage de l'air jusqu'à une ouverture d'enfichage du tuyau d'entrée d'air et, dans la position pour le raccordement de l'unité de combustion à gaz, comprend un raccordement vissé ou emboîté pour le tuyau ascendant de gaz (40) avec un raccordement de gaz interne et une liaison d'écoulement vers le raccordement de gaz externe.

13. Grill ou cuisinière selon l'une des revendications 1 à 12, **caractérisé en ce que** le mécanisme de changement comprend un encliquetage ou un blocage pour la position de fonctionnement respective.

14. Grill ou cuisinière selon l'une des revendications 1 à 13, **caractérisé en ce que**, dans la position de logement/activation de la chambre de combustion à charbon de bois (15) du mécanisme de changement, le dispositif de raccordement de gaz externe est bloqué automatiquement, de préférence de manière mécanique, par l'intermédiaire du dispositif de poussée (29) pour par l'intermédiaire d'un dispositif de verrouillage séparé.
